# DEMANDE DE BREVET EUROPEEN

(11) **EP 2 943 045 A1**
(43) Date de publication de la demande: **11.11.2015**
(21) Numéro de dépôt: 15164565.2
(22) Date de dépôt: 21.04.2015
(51) Int. Cl.: H05B 33/08, H05B 37/02

(54) **LAMPE PORTATIVE COMPORTANT UN PROCÉDÉ DE COMMANDE SANS CONTACT**

(30) Priorité: 22.04.2014 FR 1400947
(71) Demandeur: Zedel S.A., 38920 Crolles (FR)
(72) Inventeur: Bortolotti, Raphaël, 74940 Annecy le Vieux (FR); Bouzghoub, Omar, 38240 DOMENE (FR); Flores, Nicolas, 38610 GIERES (FR)
(74) Mandataire: Schuffenecker, Thierry

(57) **Abrégé**

Une lampe portative, telle que frontale, comportant un dispositif de commande de la puissance lumineuse, comportant :
- un circuit de puissance pour alimenter une ou plusieurs sources lumineuses ;
- des premiers circuits de détection de proximité d'un objet configurés pour détecter le mouvement d'un objet, tel qu'un doigt, dans un sens ou l'autre suivant un premier axe X-X';
- une unité de commande recevant les informations générées par lesdits premiers circuits de détection de proximité, ladite unité de commande étant configurée pour générer à partir du sens du mouvement de proximité une information de commande d'allumage, d'extinction ou de réglage de l'intensité lumineuse de la lampe.

## Description

### Domaine technique de l'invention

La présente invention concerne le domaine des lampes électriques portatives et notamment une lampe portative frontale dotée d'une commande sans contact de luminosité du faisceau lumineux.

### Etat de la technique

Il existe des techniques éprouvées pour réaliser la commande de dispositifs électroniques courants, telle qu'une lampe sur pied, mais ces techniques conventionnelles ne sont pas proprement adaptées à la commande d'une lampe portative telle qu'une lampe frontale que l'on commande habituellement au moyen d'un bouton poussoir ou d'un commutateur rotatif.

Or il est souhaitable d'améliorer l'ergonomie d'une lampe frontale et c'est précisément l'objet de la présente demande de brevet.

### Exposé de l'invention

La présente invention a pour but de proposer une lampe portative, telle qu'une lampe frontale, dotée d'une ergonomie améliorer permettant de commander non seulement l'allumage et l'extinction de la lampe, mais également d'en régler la puissance lumineuse.

Un autre but de la présente invention consiste à proposer une lampe frontale particulièrement compacte et exempte de commutateur manuel, et qui néanmoins permette une commande et un réglage du flux lumineux.

C'est un autre but de la présente invention que de fournir un lampe frontale à commande sans contact, dotée d'un mécanisme performant pour éviter les allumages/extinctions intempestives.

C'est enfin un quatrième but de la présente invention que de réaliser un procédé de commande de l'allumage, de l'extinction ou du réglage du flux lumineux d'une lampe frontale, voire de son pouvoir diffusant.

L'invention réalise ces buts au moyen d'une lampe portative comportant un dispositif de commande de la puissance lumineuse, comportant :
- un circuit de puissance pour alimenter une ou plusieurs sources lumineuses ;
- des premiers circuits de détection de proximité d'un objet, tel qu'un doigt ;
- une unité de commande recevant les informations générées par lesdits premiers circuits de détection de proximité, ladite unité de commande étant configurée pour discriminer le mouvement d'un objet dans un sens ou un autre suivant un premier axe (X, X') et de dériver de cette information une commande d'allumage, d'extinction et/ou de variation de l'intensité lumineuse de la lampe.

De préférence, le sens du mouvement de l'objet est utilisé par l'unité de commande pour définir le sens d'incrémentation du flux lumineux, en sorte que l'utilisateur n'a plus à se préoccuper du sens du positionnement de la lampe, par exemple lorsqu'il la dispose sur sa tête.

Dans un mode de réalisation particulier, les premiers circuits de détection de proximité sont situés sur un même axe XX' d'un même côté de la source lumineuse. Alternativement, ces premiers circuits peuvent être situés de part et d'autre de la source lumineuse.

De préférence, les premiers circuits de détection de proximité comportent chacun une antenne configurée pour modifier la fréquence d'oscillation d'un oscillateur lorsqu'un objet, tel qu'un doigt, arrive à proximité de l'antenne. Alternativement, les premiers circuits de détection pourront être basés sur un capteur ultrasonore configuré pour détecter la proximité d'un objet vis à vis de la lampe.

Dans un mode de réalisation particulier, la lampe comporte
- des premiers circuits de détection de proximité configurés pour discriminer un mouvement de gauche à droite ou de droite à gauche suivant un premier axe horizontal XX' ;
- des seconds circuits de détection de proximité configurés pour discriminer un mouvement de haut vers le bas et de bas vers le haut suivant un second axe sensiblement vertical YY'.

Dans un mode de réalisation particulier, la lampe comporte un dispositif électro-optique disposé devant la source lumineuse, tel qu'un diffuseur électro-optique permettant une commande électrique de la transparence/opacité, et les seconds circuits de détection de proximité sont configurés pour commander le coefficient de diffusion du rayonnement lumineux.

De préférence, la diffusion du rayon lumineux est générée au moyen d'un capteur PDLC commandé par l'unité de commande à partir des informations générées par les seconds circuits de détection de proximité suivant l'axe YY'.

L'invention réalise également un procédé de commande d'une lampe portative comportant les étapes :
- détection d'un mouvement de proximité de type gauche/droite ou de droite/gauche et allumage de la lampe ;
- démarrage d'un compteur générant une fenêtre de réglage de l'intensité lumineuse ;
- détection d'un nouveau mouvement de proximité durant ladite fenêtre de réglage et ;
- accroissement de l'intensité lumineuse de la lampe lorsque ledit nouveau mouvement de proximité est un mouvement de même sens que celui ayant provoqué l'allumage de la lampe ;
- réduction de l'intensité lumineuse de la lampe lorsque ledit nouveau mouvement de proximité est un mouvement de sens contraire à celui ayant provoqué l'allumage de la lampe ;
- extinction de la lampe pour tout mouvement de proximité intervenant au-delà de ladite fenêtre de réglage.

L'invention est particulièrement adaptée à la réalisation d'une lampe frontale dont on peut commander l'allumage et l'extinction quelque soit le sens suivant lequel on dispose la lampe sur la tête d'un utilisateur.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une vue perspective avant d'un mode de réalisation d'une lampe frontale compacte conforme à la présente invention.
La figure 2 représente une perspective arrière de la lampe de la figure 1, mettant en évidence le port USB permettant la recharge de la batterie.
La figure 3 illustre un premier mode de réalisation d'une lampe portative permettant une commande sans contact de l'allumage, de l'extinction et de la puissance du flux lumineux.
La figure 4 illustre un second mode de réalisation d'une lampe frontale, dans laquelle les circuits de détection de proximité sont basés sur une antenne.
La figure 5a représente un exemple de circuit électronique utilisé pour réaliser le circuit de détection de proximité du second mode de réalisation.
La figure 5b illustre un troisième mode de réalisation d'une lampe frontale, dans laquelle les circuits de détection de proximité sont basés sur un capteur ultrasonore.
Les figures 6a et 6b illustrent respectivement deux exemples de disposition des antennes respectives des dispositifs de détection de proximité suivant un axe XX'.
La figure 7 illustre un autre exemple de disposition des antennes suivant deux axes XX' et YY' respectivement perpendiculaire, de façon à permettre la discrimination du mouvement d'un objet suivant deux axes perpendiculaires.
La figure 8 illustre un mode de réalisation d'un procédé de commande de l'allumage, du réglage et de l'extinction d'une lampe frontale dotée de capteurs de proximité.
La figure 9 illustre un quatrième mode de réalisation d'une lampe frontale comportant en outre la commande sans contact du coefficient de diffusion du faisceau lumineux.
La figure 10 illustre un mode de réalisation d'un procédé permettant la commande de la puissance lumineuse mais également du pouvoir de diffusion.

### Description d'un mode de réalisation préféré

L'on décrit à présent le détail de modes de réalisation d'une lampe portative, telle qu'une lampe frontale qui peut avantageusement intégrer un mécanisme efficace de commande sans contact, permettant non seulement de faire l'économie de commutateurs mécaniques, mais également accroître la robustesse et l'étanchéité de la lampe.

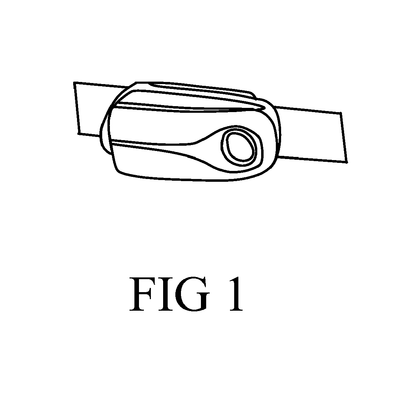

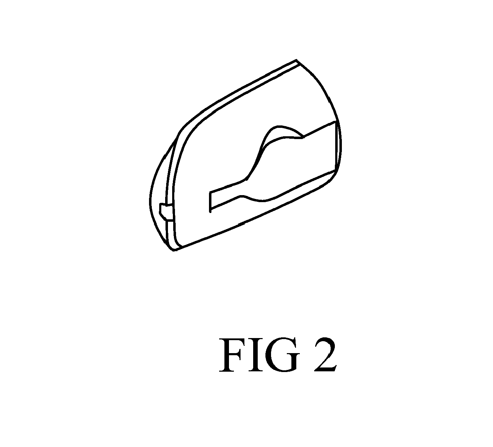

L'on peut parvenir ainsi à la réalisation d'une lampe frontale particulièrement compacte, comme celle qui est visible en **figure 1****,** et qui est à peine plus grande que le connecteur USB qu'elle comporte, visible en **figure 2****,** permettant notamment la recharge de la batterie.

Si les modes de réalisation décrits ci-après portent exclusivement sur une lampe frontale, il est clair qu'un homme du métier pourra aisément adapter le principe de l'invention à la réalisation de lampes portatives quelconques et à leurs commandes suivant les principes décrits ci-après.

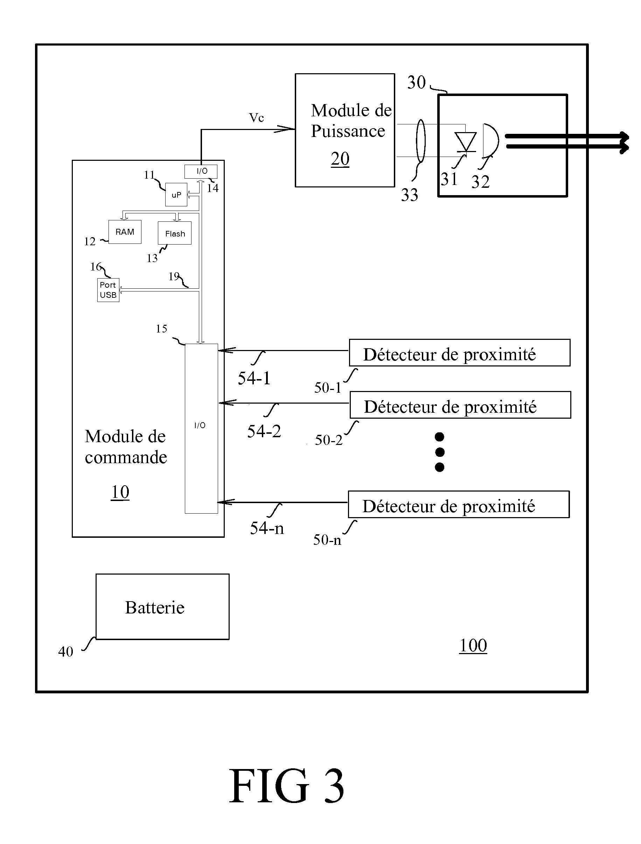

La **figure 3** illustre le détail d'un premier mode de réalisation de la lampe visibles dans les figures 1 et 2, et permettant une commande sans contact de l'allumage, de l'extinction et même du réglage de la puissance lumineuse de la lampe.

La lampe 100 comporte un module de puissance 20 associé à un module de commande 10 ainsi qu'une source lumineuse 30 comportant une ou plusieurs diodes LED(s) dotées, le cas échéant de leur système focal propre. Dans l'exemple de la figure 3, l'on a représenté, dans un souci de simplification, une unique diode LED 31 et son optique 32, alimentée par des conducteurs 33 connectés au module de puissance 20, ce qui correspond clairement à un mode de réalisation le plus compact. En revanche, lorsque la compacité n'est pas recherchée au premier plan, on pourra, notamment pour accroître la luminosité de la lampe, prévoir plusieurs diodes au sein d'un même système optique focal, voire même multiplier le nombre de systèmes optiques afin d'accroître les possibilités d'utilisation de la lampe. En particulier, on pourra envisager l'utilisation de LED plus imposantes de type *multi-chips* (*Cree XLM2*) combinée à des optiques plus imposantes, permettant une réalisation plus sophistiquée.

Dans un mode de réalisation spécifique, l'alimentation en courant de la diode LED 31 - via les conducteurs 33 - est effectué sous la commande d'une information ou d'un signal de commande Vc généré par le module de commande 10.

Le module de puissance 20 comporte spécifiquement tous les composants que l'on rencontre conventionnellement dans une lampe d'éclairage à LEDs pour la production d'un faisceau lumineux de forte intensité, et en général basée sur la Modulation en Largeur d'Impulsion MLI (ou *Pulse Width Modulation* dans la littérature anglo-saxonne), bien connue d'un homme du métier et similaire à celle que l'on rencontre dans les circuits audio de classe D. Cette modulation MLI est commandée au moyen du signal de commande Vc. En général, l'on notera que le terme « signal » mentionné précédemment renvoie à une grandeur électrique-courant ou tension - qui permet de provoquer la commande du module de puissance 20, et notamment la modulation MLI servant à alimenter en courant la diode LED 31. Il ne s'agit ici que d'un mode particulier de réalisation, étant entendu qu'il sera possible de substituer au « signal de commande Vc » toute « information de commande » , par exemple une information logique stockée dans un registre et transmise par tout moyen approprié au module de puissance 20 dans le but de commander la puissance d'émission du faisceau lumineux. Dans un mode de réalisation particulier, l'on pourra même envisager que les deux modules de commande 10 et de puissance 20 soient intégrés au sein d'un même circuit intégré.

Un homme du métier comprendra donc aisément que lorsque l'on se réfère à un « signal de commande Vc » , l'on englobe indistinctement les réalisations recourant à une grandeur électrique de commande - courant ou tension - ainsi que les réalisations dans lesquelles la commande est effectuée au moyen d'une information logique transmise au sein du module de puissance 20. Pour cette raison, l'on parlera ci-après indistinctement de signal ou d'information de commande.

D'une manière générale, les composants commutateurs et circuits qui constituent le module de puissance 20 - qu'il s'agisse de transistors bipolaires, transistors *FET (Field Effect Transistor*) ou *MOS* (*Metal Oxyde Semiconductor*) ou *MOSFET -* sont bien connus d'un homme du métier et l'exposé sera délibérément allégé à cet égard par souci de concision. De même, l'on invitera le lecteur à se renvoyer aux ouvrages généraux traitant des divers aspect de la modulation MLI.

Dans le mode de réalisation préféré qui est décrit dans la figure 3, le module de commande 10 est basée sur une architecture à base de microprocesseur comportant un processeur 11 communiquant via des bus conventionnels d'adresses, de données et de commande 19 avec de la mémoire RAM 12, de la mémoire Flash 13, voire de la mémoire ROM ou EEPROM (non représentée) etc..., ainsi qu'avec des circuits d'entrées sorties I/O. La figure 3 Illustre ainsi deux circuits d'entrée sorties, respectivement 14 et 15 qui pourront être combinés en un unique circuit le cas échéant, permettant d'interfacer, d'une part, le module de puissance 20 recevant l'information de commande Vc et, d'autre part, un ensemble de n détecteurs de proximité 50-1, à 50-n, avec n supérieur ou égal à 2.

Dans un mode de réalisation particulier, la lampe frontale comporte également un port USB (visible sur la figure 2), accessible via un module USB 16 présent au sein du module de commande 10, et communiquant avec les bus de données, d'adresses et de commande 19. Cette interface USB permet, outre la recharge d'une batterie 40 (par exemple Ion-Lithium), l'échange de données de configuration en vue du stockage de paramètres de réglage et de profils au sein de la lampe.

De cette manière, l'unité de commande peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne). Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi* etc...) . Dans un mode de réalisation particulier, la lampe frontale disposera même de sa propre adresse IP (*Internet Protocol*) de manière à pouvoir être aisément configurée, par exemple au moyen d'un serveur web dédié.

Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre une personnalisation spécifique du procédé de commande décrit ci-après, et notamment des paramètres de la fenêtre de réglage de la lampe. Alternativement ou cumulativement, les "profils" permettent, comme on le verra ci-après, de venir activer des procédures ou modes spécifiques de fonctionnement, notamment des modes utilisables pour un éclairage dit « réactif » ou « dynamique », avec un possibilité de débrayage de la régulation (mode statique) ou d'activation de la régulation (mode dynamique).

D'une manière générale, les circuits de détection de proximité 50-1 à 50-n détectent la proximité d'un objet, tel qu'un doigt par exemple, et génèrent chacun une information représentative de cette proximité qui est respectivement transmise via des circuits 54-1 à 54-n au module d'entrée/sortie 15 du module de commande 10.

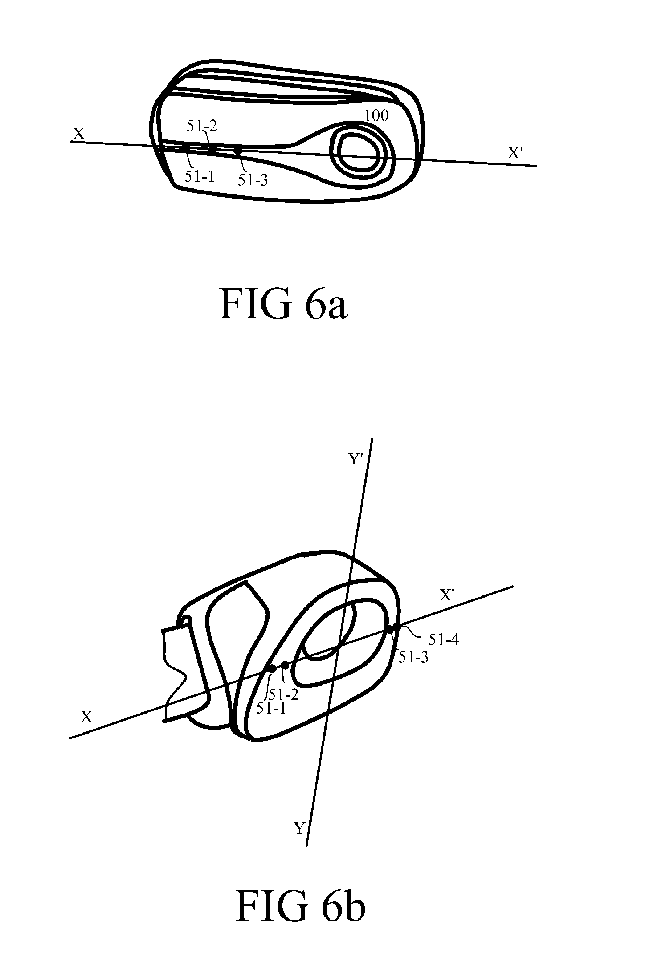

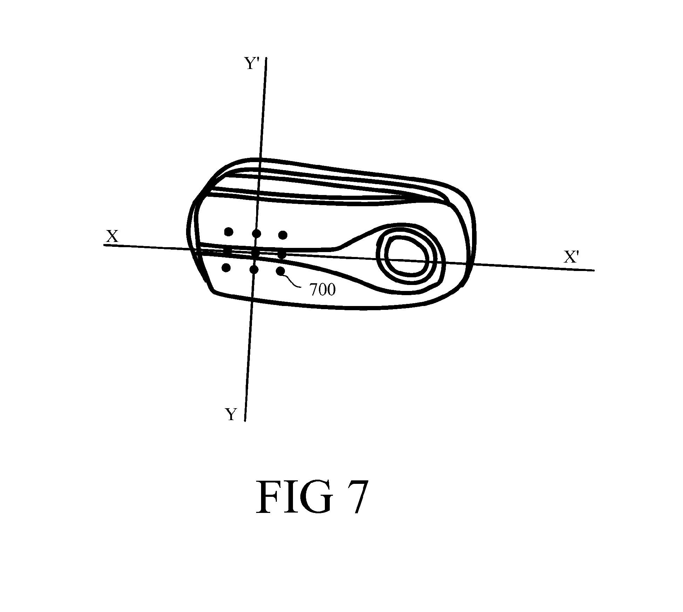

Ainsi le module de commande 10 reçoit un certain nombre d'informations générées par les circuits de détection de proximité 50-1 à 50-n, qu'il peut traiter au moyen d'algorithmes appropriés en fonction des programmes stockés dans sa mémoire, de manière à dériver de toutes ces information le sens de mouvement de cet objet suivant un premier axe XX', notamment représenté dans les figures 6a, 6b et 7, en vue de traduire ce mouvement en une commande effective d'allumage, d'extinction et/ou de variation de l'intensité lumineuse de la lampe.

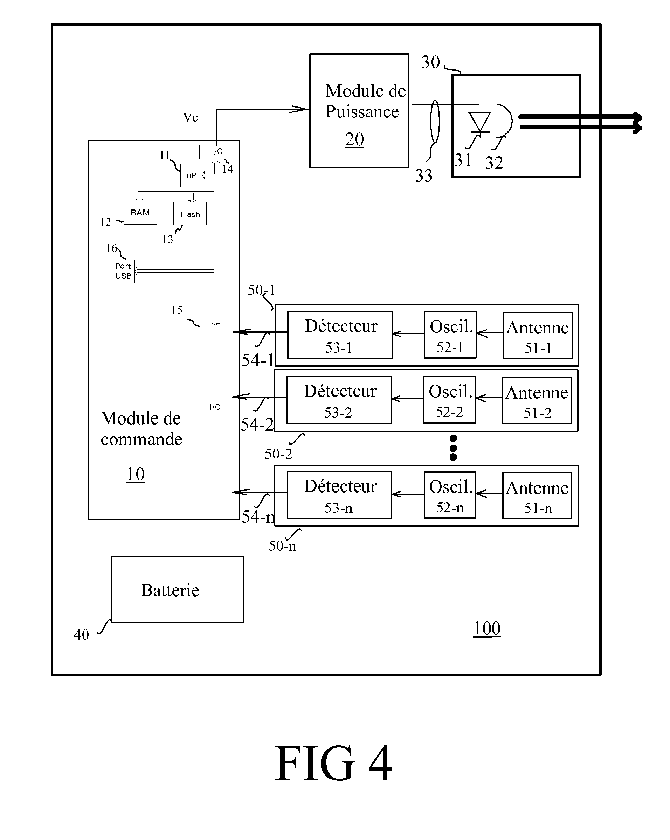

La **figure 4** illustre un second mode de réalisation d'une lampe frontale, dans laquelle chacun des circuits de détection de proximité, par exemple le circuit de détection de proximité 50-1 (resp. 50-2, .... 50-n) est basé sur une antenne 51-1 (respect. 51-2, ... 51-n) connectée à un circuit oscillant 52-1 (resp. 52-2, ... , 52-n). La présence d'un doigt ou d'un autre objet proche de l'antenne 51-1 (resp. 51-2, ... 51-n) fait baisser la fréquence d'oscillation de l'oscillateur 52-1 (resp. 52-2, ... 52-n), ce que détecte un détecteur 53-1 (resp. 53-2, ...53-n), qui transmet alors une information correspondante au module de commande 10 via des conducteurs 54-1 (resp. 54-2, ..., 54-n).

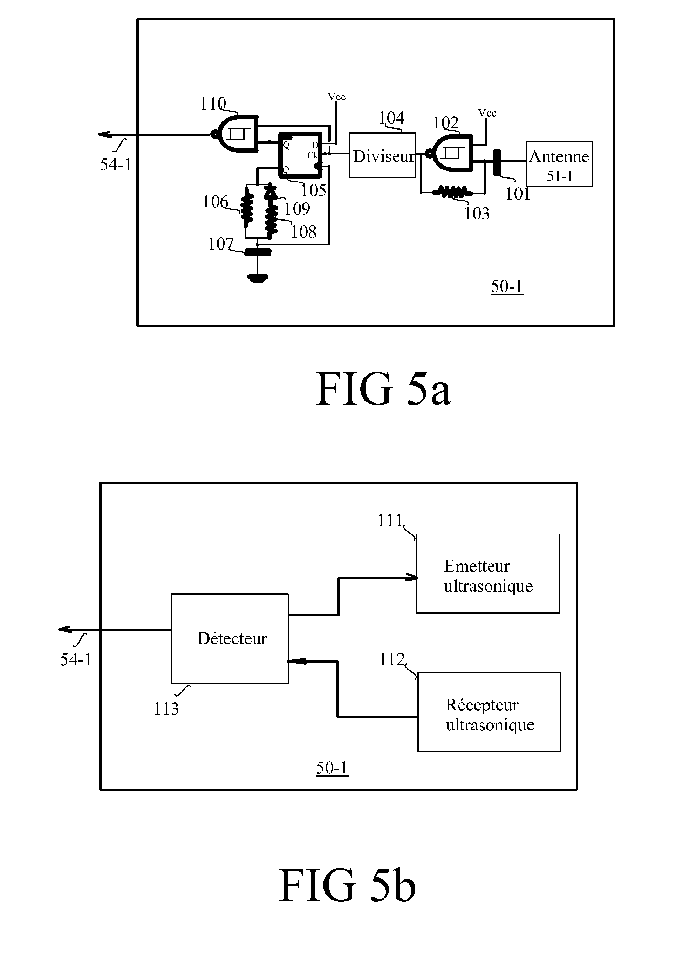

La **figure 5a** montre plus particulièrement, à des fins d'illustration, un exemple de réalisation pratique d'un détecteur de proximité 50-1 utilisé dans le second mode de réalisation illustré en figure 4.

L'on voit que l'antenne 51-1 est connectée via une capacité 101 à une première entrée d'une porte NAND 102 - de type Trigger de Schmidt - dont la seconde entrée est connectée à un potentiel Vcc représentatif d'un niveau logique « 1 ». Une résistance 103 est connectée entre la première entrée de la porte NAND 102 et sa sortie en sorte que l'ensemble composé des éléments 101-103 réalise un circuit oscillant à une fréquence fixé par le produit de la valeur de capacité 101 et de la valeur de la résistance 103, par exemple de l'ordre de 500 000 Hz. La sortie de la porte NAND 102 est connectée à l'entrée d'un circuit intégré 104 diviseur de fréquence permettant de générer un signal carré à une fréquence plus faible, par exemple de l'ordre de quelques centaines de Hertz, qui est ensuite transmise à l'entrée horloge (Ck) d'une bascule de type « Flip-flop » 105, dont l'entrée D est connectée à un niveau logique « 1 ». La sortie Q de la bascule Flip-flop 105 est connectée à une première électrode d'une résistance 106 et à la cathode d'une diode 109, dont l'anode est connectée à une première électrode d'une résistance 108. La résistance 108 a une seconde électrode qui est connectée à la seconde électrode de la résistance 106, à une première électrode d'un condensateur de charge 107 ainsi qu'à l'entrée RAZ (remise à zero) de la bascule 105. Enfin, la seconde électrode du condensateur 107 est connectée à la masse.

La bascule 105 comporte une sortie complémentaire connectée à une première entrée d'une porte NAND 110 dont la seconde entrée reçoit le signal d'horloge de 105, généré par la sortie du circuit 104 diviseur de fréquence.

Le fonctionnement du circuit est le suivant. En sortie du circuit 104 diviseur de fréquence, l'on dispose d'un signal carré ayant une fréquence de l'ordre de quelques centaines de hertz, laquelle fréquence baisse lorsque un objet tel qu'un doigt arrive à proximité de l'antenne.

Au moment du front montant de ce signal en sortie du circuit 104, le niveau logique « 1 » présent sur l'entrée « D » de la bascule 105 est transmis à la sortie Q ; provoquant ainsi la charge du circuit série formé du condensateur 107 et de la résistance 106, la diode 109 étant connectée en sens inverse. Lorsque le potentiel du condensateur 107 atteint le seuil de déclenchement de l'entrée RAZ de la bascule 105, cette dernière est remise à zéro entraînant ainsi un niveau logique bas sur la sortie Q et, corrélativement un niveau logique haut sur la sortie complémentaire connectée à la première entrée de la porte NAND 110. A ce moment, le condensateur 107 est rapidement déchargé via la diode 109 et la résistance 108 présentant une valeur significative plus faible que celle de la valeur de la résistance 106, de manière à préparer le traitement du prochain front montant du signal présent à l'entrée d'horloge Ck de la bascule 105.

D'une manière générale, comme cela est connu d'un homme du métier, la signal d'horloge présente un rapport cyclique de 50/50, avec un niveau haut durant la première moitié du cycle et un niveau bas durant l'autre moitié du cycle. En sorte que, durant la première moitié du cycle, la première entrée de la porte NAND 110 est à un niveau logique 1. Pendant toute la charge du condensateur 107, la sortie complémentaire Q est à un niveau bas, en sortie que la sortie de la porte NAND 110 reste à un état haut.

L'on dimensionne la valeur des composants pour que la remise à zéro de la bascule 105 ne puisse, en temps « normal » (ie sans détection d'objet à proximité de l'antenne 51-1), durant la première moitié du cycle en sorte que la sortie de la porte NAND 110 reste normalement constamment à un état haut.

En revanche, si un objet arrive à proximité de l'antenne 51-1, la fréquence d'oscillation tend à baisser ce qui, sans modifier le rapport cyclique, accroît significativement la durée de la première moitié du cycle durant laquelle l'entrée d'horloge Ck est à un niveau 1.

Si la fréquence baisse suffisamment, il en résulte la possibilité d'une RAZ de la bascule 105 pendant la première moitié du cycle, en sorte que l'on aura alors une commutation de la porte NAND 110 qui pourra générer un signal d'alerte via le circuit 54-1 à l'attention du module de commande 10 de la lampe frontale.

Comme on le voit, la combinaison de la bascule 105 et de la porte NAND 110 réalise, dans le principe, un détecteur de fréquence permettant de générer un signal logique lorsque la fréquence d'oscillation baisse suffisamment. Clairement, il ne s'agit que d'un exemple particulier de circuits utilisable, qui pourra être perfectionné à loisir, et un homme du métier pourra aisément modifier le schéma électronique pour l'adapter à de multiples besoins.

Par ailleurs, la détection de fréquence n'est qu'un mode possible de réalisation et la **figure 5b** illustre un troisième mode de réalisation comportant un capteur à ultrasons permettant de déterminer si une entité approche à proximité de la lampe, et ce sans requérir de contact mécanique. A cet effet, un émetteur ultrasonique 111, basé sur transducteur piézo-électrique, génère des ondes ultrasonores qui sont réfléchies sur un objet situé à proximité et qui peuvent être perçues au moyen d'un récepteur 112 générant une tension représentative des vibrations sonores reçues. Comme cela est connu d'un homme du métier, les détecteur à ultrasons peuvent ainsi servir à déterminer la distance par rapport à un objet ou une entité sur la base de l'estimation de l'intervalle de temps entre l'envoi d'une onde acoustique et la réception d'un écho de cette onde réfléchi par l'objet.

Un circuit spécifique de détection 113 illustré dans la figure 5b peut ainsi analyser le signal généré par le récepteur 112 de manière à dériver une information représentative qui pourra ensuite être transmise au module de commande 10 via le conducteur 54-1.

Clairement, le mode de réalisation de la figure 5b n'est, une fois encore, qu'un exemple particulier non limitatif et d'autres mode de réalisation pourront être envisagés par un homme du métier, notamment basées sur la détection d'une modification d'un champ magnétique ou d'une capacité statique etc...

On a représenté dans la **figure 6a****,** à des fins d'illustrations, les positions prises par un ensemble de trois antennes 51-1, 51-2 et 51-3 sur une lampe frontale 100, et correspondant à autant de circuits détecteurs de proximité (non représentés). Clairement, les positions indiquées sur la figure 6a ne sont données qu'à des fins d'illustrations et ne sont, en général, pas apparentes sur le produit final mis sur le marché, qui est par conséquent particulièrement esthétique.

Dans la lampe frontale de la figure 6a, l'on voit ainsi que les trois antennes sont disposées d'un même côté relativement à la source lumineuse (située à droite), et alignées sur un axe XX', permettant ainsi la détermination du mouvement d'un objet (tel qu'un doigt) suivant cet axe XX'. En pratique, pour rendre la commande de la lampe robuste et performante, le module de commande 10 et les algorithmes mis en oeuvre par le processeur 11 au sein de ce dernier, effectuent un traitement de données sur les informations respectivement transmises par chacun des circuits détecteurs de proximité 50-1, 50-2 et 50-3. Dans un mode de réalisation particulier, l'algorithme de traitement vérifiera la vraisemblance de la commutation des signaux électriques respectivement générés par chacun des circuits détecteurs de proximité, notamment les délais entre ces derniers, pour valider ou non la prise en compte de ces informations. C'est ainsi que le mouvement d'un doigt passant « devant » la lampe 100 de la figure 6a devra se traduire par un séquencement parfaitement linéaire des signaux transmis par chacun des circuits de détection de proximité puisque les antennes sont disposées de manière équidistante sur un même axe XX', ce que pourra valider l'algorithme de traitement mis en oeuvre par le processeur 11 au sein du module de commande 10.

La **figure 6b** illustre un autre mode de réalisation d'une lampe sur laquelle l'on a représenté le positionnement des antennes de part et d'autre de la source lumineuse, avec disposées à gauche de cette dernière, les antennes 51-1 et 51-2 et, à droite de la source lumineuse, les antennes 51-3 et 51-4.

Clairement, tout autre disposition peut être envisagée en fonction des axes suivant lesquels l'on souhaite pouvoir discriminer un mouvement (comme l'axe YY' schématiquement représenté sur la figure 6b).

C'est ainsi que la **figure 7** illustre un autre exemple de disposition d'un jeu de neuf antennes suivant une matrice 700 - formée de 3x3 points de positionnement - faisant apparaître deux axes XX' et YY' respectivement perpendiculaires, de façon à permettre la discrimination du mouvement d'un objet suivant ces deux axes XX' et YY'.

La détection de proximité effectuée grâce aux antennes disposées, notamment sur la lampe de la figure 7, permet ainsi de commander l'allumage ou l'extinction de la lampe, laquelle pourra suivre les étapes :
- détection d'un premier mouvement de proximité de type gauche/droite ou de type droite/gauche et allumage de la lampe ;
- démarrage d'un compteur générant une fenêtre de réglage de l'intensité lumineuse ;
- détection d'un second mouvement de proximité durant ladite fenêtre de réglage et ;
- comparaison du sens du second mouvement par rapport à celui du premier mouvement et :
   - accroissement de l'intensité lumineuse de la lampe lorsque le second mouvement de proximité présente le même sens que celui ayant provoqué l'allumage de la lampe ;
   - réduction de l'intensité lumineuse de la lampe lorsque le second mouvement est de sens contraire à celui du premier mouvement;
- extinction de la lampe pour tout mouvement de proximité intervenant au-delà de ladite fenêtre de réglage.

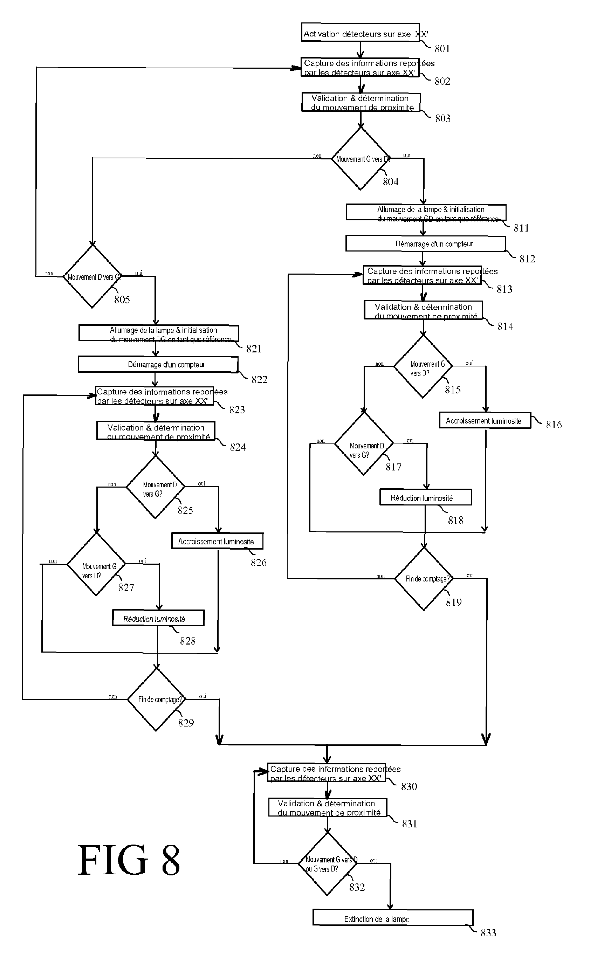

A des fins d'illustration de la grande généralité du procédé ci-dessus, l'on a illustré en figure 8 le détail d'un mode de réalisation d'un procédé de commande de l'allumage, du réglage et de l'extinction d'une lampe frontale dotée de capteurs de proximité.

Le procédé démarre par une étape 801 consistant en l'activation des circuits détecteurs de proximité, dont les antennes correspondantes sont positionnées sur un axe XX'.

Puis le procédé poursuit par une étape étape 802 au cours de laquelle le module de commande procède à la capture des informations de détection reportées par les circuits détecteurs de proximité 50-1 à 50-n, notamment positionnés sur l'axe XX'.

Puis le procédé procède dans une étape 803 à une analyse de ces informations de détection par les circuits détecteur de proximité 50-1 à 50-n, dans le but d'opérer une validation de ces informations et de déterminer finalement l'existence d'un mouvement devant la lampe ainsi que le sens effectif de ce mouvement. Comme cela a été mentionné précédemment, la validation pourra être effectuée au moyen de différentes vérifications, par exemple de la vraisemblance de la séquence de détections reportées par une série de trois détecteurs dont les antennes respectives sont positionnées linéairement suivant l'axe XX' et qui devront ainsi, tour à tour, détecter une commutation correspondante dans la fréquence d'oscillation de chacun des détecteurs. Clairement de multiples algorithmes de vérification et de validation sont envisageables et laissées à l'appréciation d'un homme du métier.

Puis, dans une étape 804, le procédé effectue un test pour déterminer si un mouvement de la gauche vers la droite a été détectée et validée, auquel cas, le procédé poursuit avec une étape 811 et, dans le cas contraire, avec une étape 805.

Dans l' étape 811, le procédé procède à l'allumage de la lampe et à l'initialisation de cette dernière pour considérer ce sens GAUCHE-DROITE comme une référence servant à déterminer le sens positif d'accroissement de l'intensité lumineuse.

Puis , dans une étape 812, le procédé démarre un compteur dans le but de réaliser une fenêtre temporelle de réglage pour permettre à l'utilisateur de venir régler la puissance du faisceau lumineux généré par la lampe.

Le procédé poursuit ensuite par une étape 813, au cours de laquelle le module de commande 10 procède à la capture des informations de détection reportées par les circuits de détection de proximité 50-1 à 50-n, similaire à l'étape 802 précédente.

Puis le procédé poursuit avec une étape 814, similaire à l'étape 803, visant à détecter et valider le sens d'un mouvement de proximité potentiellement détecté par les détecteurs 50-1 à 50-n.

`L'étape 815 est un test visant à comparer le sens de la seconde détection par rapport à celui testé lors de la 804, et pris comme référence.

C'est ainsi que si le second mouvement est identifié comme étant un mouvement de la Gauche vers la Droite, alors le procédé poursuit avec une étape 816 et, dans le cas contraire, avec l'étape 817.

Dans l'étape 816, le procédé procède à l'accroissement de l'intensité lumineuse de la lampe, au moyen d'un commande ou d'un signal de commande Vc approprié transmis au circuit de puissance 20. Puis le procédé va à l'étape 819.

Dans l'étape 817, le procédé teste le second mouvement potentiellement identifié et détermine si ce mouvement est un mouvement de la droite vers la gauche, auquel cas le procédé poursuit avec une étape 818 et, dans le cas contraire, va à l'étape 819.

Dans l'étape 818, le module de commande 10 commande une réduction de l'intensité lumineuse de la lampe. Le procédé poursuit ensuite avec l'étape 819.

Comme on le voit, par la combinaison avantageuse des étapes décrites précédemment, le premier sens d'allumage de la lampe est utilisé pour servir de référence pour la détermination du sens positif de variation de l'intensité lumineuse.

Il en résulte l'avantage significatif pour l'utilisateur de ne plus avoir à se soucier du sens de positionnement de la lampe (particulièrement lorsqu'il s'agit d'une lampe compacte) qui pourra être fixée sur sa tête sans précaution particulière tout en conservant la possibilité, pour l'utilisateur, d'utiliser les mêmes « gestes » et mouvements de doigt pour définir la commande de la lampe.

Ainsi , avec un balayage dans le sens Gauche-Droite, l'utilisateur procède à l'allumage de la lampe et peut, en poursuivant le même mouvement de balayage, accroître l'intensité du faisceau lumineux. Avec un balayage en sens inverse, le lampe réduit la puissance du faisceau lumineux.

L'on parvient ainsi à une commande particulièrement efficace et ergonomique et ce sans nécessiter de commutateurs manuels.

En revenant au procédé de la figure 8, l'on voit que l'étape 819 est un test pour déterminer si l'on atteint la fin du comptage, correspondant à la fermeture de la fenêtre de réglage initiée dans l'étape 812.

Tant que l'on arrive pas en fin de comptage, le procédé revient à l'étape 813, ce qui permet ainsi à l'utilisateur de poursuivre la phase de réglage de la lampe.

Au contraire, si la fenêtre de réglage se ferme, par exemple au bout de 30 secondes, le procédé poursuit avec une étape 830 qui correspondra à la fin du procédé visant à permettre l'extinction de la lampe.

Si le test de l'étape 804 n'a pas conduit à établir la présence d'un mouvement de la gauche vers la droite, le procédé poursuit avec une étape 805 consistant à déterminer si, au contraire, un mouvement de droite vers la gauche a pu être identifié et validé, auquel cas le procédé va à une étape 821 et, dans le cas contraire, retourne à l'étape 802.

D'une manière générale, les étapes 821 à 829 sont le pendant des étapes 811 à 819 décrites précédemment.

Dans l'étape 821, le procédé procède à l'allumage de la lampe et l'initialisation de cette dernière avec le mouvement droite-gauche pris comme référence pour la future comparaison avec un nouveau mouvement potentiel suivant l'axe XX'.

Dans une étape 822, le démarrage d'un compteur est réalisé de manière à ouvrir la fenêtre de réglage de la puissance lumineuse.

Puis le procédé se poursuit avec une étape 823 permettant la capture par le module de commande 10 des informations reportées par les circuits de détection de proximité 50-1 à 50-n.

Puis le procédé poursuit par la validation de ces informations dans le but de déterminer un nouveau mouvement de proximité dans une étape 824, dont le sens est testé dans une étape 825.

Si le nouveau mouvement correspond à un mouvement de la droite vers la gauche, dans l'étape 825, le procédé poursuit avec une étape 826 et, dans le cas contraire, passe à l'étape 827.

Dans l'étape 826, le module de commande 10 génère une information de commande ou un signal de commande adéquat à l'attention du module de puissance 20 de manière à accroître ou incrémenter d'une fraction prédéfinie l'intensité lumineuse générée par la lampe. Le procédé se poursuit ensuite par l'étape 829.

Dans l'étape 827, le procédé détermine si le mouvement identifié est un mouvement de la gauche vers la droite, auquel cas, le procédé poursuit avec une étape 828 et, dans le cas contraire, va à l'étape 829.

Dans l'étape 828, le module de commande génère une information de commande visant à réduire l'intensité lumineuse de la lampe, et le procédé va ensuite à l'étape 829.

Comme précédemment, pour l'étape 819, l'étape 829 est un test permettant de déterminer la fermeture de la fenêtre de réglage. En effet, si le comptage arrive à son terme, le procédé poursuit avec une étape 830 et, dans le cas contraire, le procédé retourne à l'étape 823 permettant à l'utilisateur une nouvelle phase de réglage de la puissance de la lampe.

Dans les étapes ultérieures (830-833), la fenêtre de réglage est éteinte et, par conséquent, tout nouveau mouvement, qu'il s'agisse d'un mouvement de la gauche vers la droite ou un mouvement en sens contraire, se traduira par l'extinction de la lampe, comme on le voit avec la séquence d'étapes ultérieures.

Plus spécifiquement, l'étape 830 correspond à la capture par l'unité de commande 10 des informations de détection reportées par les circuits de détection de proximité 50-1 à 50-n.

Puis dans une étape 831, ces informations sont analysées et validées de manière à déterminer un mouvement de proximité.

L'étape 832 est un test visant à déterminer si un mouvement de proximité de type Droite-Gauche ou Gauche-Droite est identifié, auquel cas le procédé poursuit avec l'extinction de la lampe dans une étape 833.

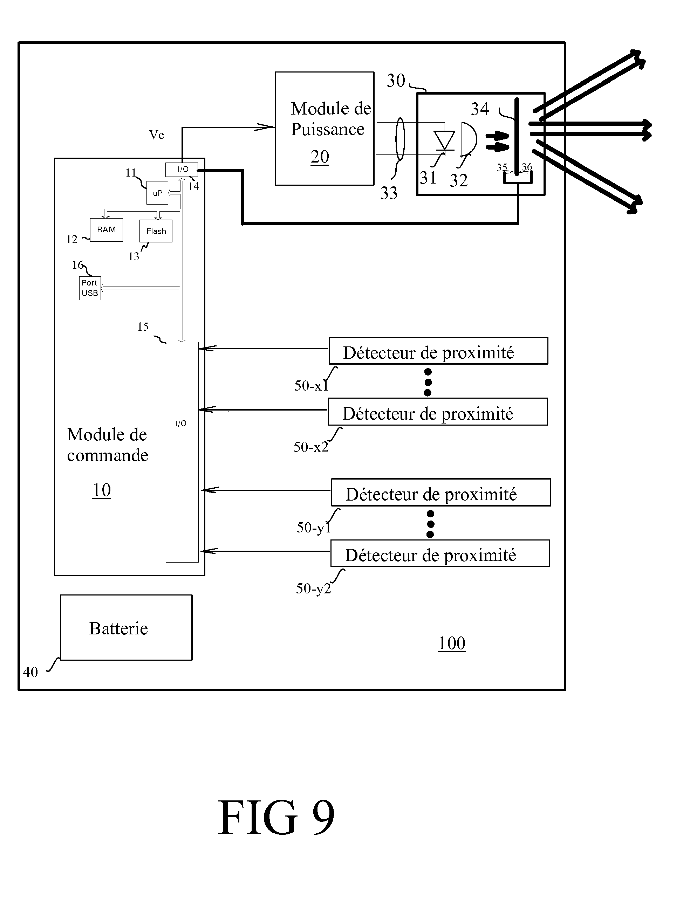

La figure 9 illustre un quatrième mode de réalisation d'une lampe frontale comportant en outre la commande sans contact du coefficient de diffusion du faisceau lumineux.

Dans un souci de simplification de l'exposé, les composants qui sont similaires à ceux déjà décrits conservent leur référence numérique. C'est ainsi que la lampe frontale de la figure 9 conservent une batterie 40, un module de commande 10 comportant un processeur 11 communiquant via des bus d'adresses/données/commande avec de la mémoire RAM 12, de la mémoire flash 13 et des circuits d'entrée/sortie I/O 14 et 15.

De la même manière, un module de puissance 20 permet de commande l'alimentation électrique de la source lumineuse 30, et notamment de la ou des LED(s) 31 via des conducteurs 33.

La lampe comporte une source lumineuse 30 générant un faisceau lumineux généré par exemple au moyen d'une ou plusieurs diodes LED(s). La source lumineuse 30 pourra être dotée d'une optique primaire destinée à assurer une première collimation de manière à permettre la formation d'un faisceau plutôt étroit.

Optionnellement, on pourra prévoir une optique secondaire 32 destinée à améliorer, en tant que de besoin, la collimation de la source et accroître ainsi, en tant que de besoin, la géométrie étroite du faisceau.

La lampe comporte ensuite un dispositif électro-optique 34 disposé devant la source lumineuse, tel qu'un diffuseur électro-optique permettant une commande électrique de la transparence/opacité, de manière à pouvoir commander la géométrie du faisceau lumineux généré par la ou les LED(s).

De préférence le dispositif électro-optique 34 est constitué d'un film PDLC (Cristaux liquides dispersés dans des polymères ou polymère à cristaux liquides dispersif) qui, comme un homme du métier le sait, est constitué d'une mise en oeuvre particulière de cristaux liquides par dispersion hétérogène au sein d'une matrice polymère.

Ce film PDLC peut remplacer avantageusement la vitre disposée habituellement devant la source lumineuse et protégeant celle dernière, et comporte deux électrodes 35 et 36 de polarisation destinées à recevoir un signal de commande, par exemple un potentiel de commande généré en sortie du module I/O 14. On obtient ainsi une combinaison avantageuse d'une source lumineuse spécifiquement étroite et d'un diffuseur électro-optique PDLC que l'on peut venir commander électriquement de manière à générer diverses géométries de faisceaux lumineux, depuis le faisceau le plus étroit (lorsque le film PDLC est parfaitement transparent) jusqu'à une diffusion maximum assurant une diffusion de la lumière dans toutes les directions, comme cela est illustré dans la figure 9. Grâce à cette disposition particulièrement avantageuse, l'on peut ainsi générer, au moyen d'une unique source lumineuse à faisceau étroite, une grande variété d'angles ou d'ouvertures de faisceau. Et ces nouvelles fonctionnalités seront permises tout en en réduisant considérablement l'encombrement de la lampe puisque, dans le meilleur des cas, une seule LED sera nécessaire pour produire une grande variété de faisceaux lumineux, laquelle produira en outre une teinte parfaitement homogène.

Dans le mode de réalisation de la figure 9, l'on dispose deux jeux distincts de circuits de détection de proximité communiquant avec le circuit 15 du module de commande 10, respectivement un premier jeu illustré par les circuits 50-x1 et 50-x2 de la figure 9 et un second jeu illustré par les circuits 50-y1 et 50-y2, destinés à détecter un mouvement suivant deux axes perpendiculaires XX' et YY', comme cela est illustré dans la lampe de la figure 6b ou celle de la figure 7.

Le premier jeu de circuits de détection de proximité (illustré par les circuits 50-x1 et 50-x2) est destiné à produire des informations et/ou signaux de commande destinées à être traitées par le module de commande 10 pour détecter un mouvement suivant un axe XX'.

Au contraire, le second jeu de circuits de détection de proximité (illustré par les circuits 50-y1 et 50-y2) est destiné à générer des informations et/ou signaux de commande destinés à être traitées par le module de commande 10 pour la détection d'un mouvement suivant un axe YY' perpendiculaire à l'axe XX'.

De cette manière, l'unité de commande est en mesure, au moyen d'un traitement analytique et algorithme approprié, à générer une information ou un signal de commande Vc à l'attention du module de puissance 20, mais également deux potentiels de commande transmis aux électrodes 35 et 36 du film PDLC 34, pour commander automatiquement l'allumage/l'extinction de la lampe ou sa puissance lumineuse, mais également pour commander le phénomène de diffusion du faisceau lumineux transitant par ce film PDLC.

Plus spécifiquement, la commande de la diffusion est telle qu'en l'absence de différence de potentiel entre les électrodes 35 et 36, la diffusion opérée par le film PDLC 34 est maximale, produisant ainsi des rayons lumineux dans toutes les directions (comme cela est illustré dans la figure 9). Au contraire, lorsque le module de commande 10 génère une différence de potentiel importante entre les deux électrodes 35 et 36 - de l'ordre de quelques dizaines de volts - le film PDLC se révèlera être d'une transparence totale ou quasi totale, en sorte que seul un faisceau étroit sera généré par la lampe portative.

L'on peut améliorer ainsi significativement la commande d'une lampe dotée de fonctionnalités sophistiquées. L'on pourra même adapter l'invention pour sa mise en oeuvre dans une lampe dite « dynamique » ou « réactive » connue en intégrant ainsi un film PDLC électriquement commandable, telle que décrite dans la demande de brevet WO2009/133309 déposée par la demanderesse de la présente demande de brevet.

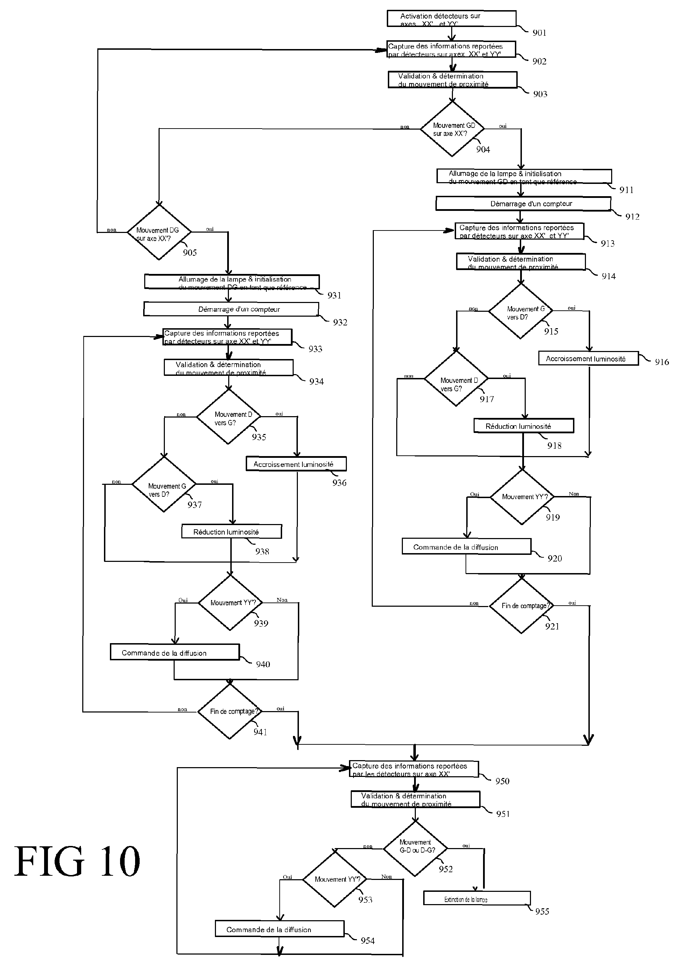

La **figure 10** illustre un mode de réalisation d'un procédé permettant la commande de la puissance lumineuse mais également du pouvoir de diffusion.

Le procédé démarre par une étape 901 consistant en l'activation des détecteurs positionné sur les deux axes XX' et YY'.

Puis le procédé poursuit par une étape 902 au cours de laquelle le module de commande procède à la capture des informations de détection reportées par les détecteurs 50-x1, 50-x2 positionnés sur l'axe XX' , mais également les informations générées par les détecteurs 50-y1 et 50-y2 positionnés sur l'axe YY'.

Puis le procédé procède dans une étape 903 à une analyse de ces informations de détection, dans le but d'opérer une validation de ces informations et de déterminer finalement l'existence d'un mouvement devant la lampe et le sens effectif de ce mouvement.

Dans une étape 904, le procédé effectue un test pour déterminer si un mouvement de la gauche vers la droite a été détectée et validée, auquel cas, le procédé poursuit avec une étape 911 et, dans le cas contraire, avec une étape 905.

Dans l'étape étape 911, le procédé procède à l'allumage de la lampe et à l'initialisation de cette dernière pour considérer ce sens GAUCHE-DROITE comme une référence servant à déterminer le sens positif d'accroissement de l'intensité lumineuse.

Puis , dans une étape 912, le procédé démarre un compteur dans le but de réaliser une fenêtre temporelle de réglage pour permettre à l'utilisateur de venir régler la puissance du faisceau lumineux généré par la lampe.

Le procédé poursuit ensuite par une étape 913, au cours de laquelle le module de commande 10 procède à la capture des informations de détection reportées par les circuits de détection de proximité 50-x1 à 50-x2.

Puis le procédé poursuit avec une étape 914, visant à détecter et valider le sens d'un mouvement de proximité potentiellement détecté par les détecteurs 50-x1 et 50-x2.

L'étape 915 est un test visant à comparer le sens de la seconde détection par rapport à celui testé lors de la 904, et pris comme référence. C'est ainsi que si le second mouvement est identifié comme étant un mouvement de la Gauche vers la Droite, alors le procédé poursuit avec une étape 916 et, dans le cas contraire, avec l'étape 917.

Dans l'étape 916, le procédé procède à l'accroissement de l'intensité lumineuse de la lampe, au moyen d'un commande ou d'un signal de commande Vc approprié transmis au circuit de puissance 20. Puis le procédé va à l'étape 919.

Dans l'étape 917, le procédé teste le second mouvement potentiellement identifié et détermine si ce mouvement est un mouvement de la droite vers la gauche, auquel cas le procédé poursuit avec une étape 918 et, dans le cas contraire, va à l'étape 919.

Dans l'étape 918, le module de commande 10 commande une réduction de l'intensité lumineuse de la lampe. Le procédé poursuit ensuite avec l'étape 919.

L'étape 919 consiste en un test visant à déterminer si les informations reportées, analysées et validées par le module de commande 10 permettent d'identifier un mouvement suivant l'axe YY' perpendiculaire à l'axe XX', auquel cas ce mouvement est utilisé pour modifier la commande du coefficient de diffusion de la lampe dans une étape 920. En pratique, l'on pourra procéder à un accroissement prédéfini du coefficient de diffusion lorsque un mouvement de bas vers le haut est identifié. Comme en pratique, aucune erreur suivant le sens YY' n'est à craindre lors du positionnement de la lampe sur la tête de l'utilisateur (contrairement au sens XX'), l'on pourra ainsi convenir d'une référence absolue pour fixer l'incrémentation positive du coefficient de diffusion. Tout autre mécanisme reste cependant envisageable. Le procédé se poursuit ensuite par une étape 921.

Si aucun mouvement n'est identifié suivant l'axe YY', le procédé va à l'étape 921 qui est un test pour déterminer si l'on atteint la fin du comptage, correspondant à la fermeture de la fenêtre de réglage initiée dans l'étape 912.

Tant que l'on arrive pas en fin de comptage, le procédé revient à l'étape 913, ce qui permet ainsi à l'utilisateur de poursuivre la phase de réglage de la lampe, tant en ce qui concerne la puissance lumineuse que le coefficient de diffusion.

Au contraire, si la fenêtre de réglage se ferme, par exemple au bout de 30 secondes, le procédé poursuit avec une étape 950 qui correspondra à la fin du procédé visant à permettre l'extinction de la lampe.

Si le test de l'étape 904 n'a pas conduit à établir la présence d'un mouvement de la gauche vers la droite, le procédé poursuit avec une étape 905 consistant à déterminer si, au contraire, un mouvement de droite vers la gauche a pu être identifié et validé, auquel cas le procédé va à une étape 931 et, dans le cas contraire, retourne à l'étape 902.

Dans l'étape 931, le procédé procède à l'allumage de la lampe et l'initialisation de cette dernière avec le mouvement droite-gauche pris comme référence pour le sens positif d'incrémentation de la puissance lumineuse.

Dans une étape 932, le démarrage d'un compteur est réalisé de manière à ouvrir la fenêtre de réglage de la puissance lumineuse.

Puis le procédé se poursuit avec une étape 933 permettant la capture par le module de commande 10 des informations reportées par les circuits de détection de proximité 50-x1 à 50-x2 et 50-y1 et 50-y2.

Puis le procédé poursuit par la validation de ces informations dans le but de déterminer un nouveau mouvement de proximité dans une étape 934, dont le sens est testé dans une étape 935.

Si le nouveau mouvement correspond à un mouvement de la droite vers la gauche, dans l'étape 935, le procédé poursuit avec une étape 936 et, dans le cas contraire, passe à l'étape 937.

Dans l'étape 936, le module de commande 10 génère une information de commande ou un signal de commande adéquat à l'attention du module de puissance 20 de manière à accroître ou incrémenter d'une fraction prédéfinie l'intensité lumineuse générée par la lampe. Le procédé se poursuit ensuite par l'étape 939.

Dans l'étape 937, le procédé détermine si le mouvement identifié est un mouvement de la gauche vers la droite, auquel cas, le procédé poursuit avec une étape 938 et, dans le cas contraire, va à l'étape 939.

Dans l'étape 938, le module de commande génère une information de commande visant à réduire l'intensité lumineuse de la lampe, et le procédé va ensuite à l'étape 939.

L'étape 939 consiste en un test visant à déterminer si les informations reportées, analysées et validées par le module de commande 10 permettent d'identifier un mouvement suivant l'axe YY' perpendiculaire à l'axe XX', auquel cas ce mouvement est utilisé pour modifier la commande du coefficient de diffusion de la lampe dans une étape 940. Comme précédemment, l'on pourra procéder à un accroissement prédéfini du coefficient de diffusion lorsque un mouvement de bas vers le haut est identifié. Le procédé se poursuit ensuite par une étape 941.

Si aucun mouvement n'est identifié suivant l'axe YY', le procédé va à l'étape 941 qui est un test pour déterminer si l'on atteint la fin du comptage, correspondant à la fermeture de la fenêtre de réglage initiée dans l'étape 932.

Si le comptage arrive à son terme, le procédé poursuit avec une étape 950 et, dans le cas contraire, le procédé retourne à l'étape 933 permettant à l'utilisateur une nouvelle phase de réglage de la puissance de la lampe.

Dans l'étape 950, le procédé procède à une capture par le module de commande 10 des informations reportées par les circuits de détection de proximité 50-x1, 50-x2 et 50-y1 et 50-y2.

Puis dans une étape 951, ces informations sont analysées et validées de manière à déterminer un mouvement de proximité, par exemple suivant l'axe XX'.

L'étape 952 est un test visant à déterminer si un mouvement de proximité de type Droite-Gauche ou Gauche-Droite est identifié, auquel cas le procédé poursuit avec l'extinction de la lampe dans une étape 953.

Comme on le voit sur les nombreux exemples décrits précédemment, l'on peut ainsi procéder à une commande particulièrement sophistiquée du fonctionnement de la lampe et ce sans recourir à un commutateur manuel, tout en autorisant, par les nombreuses phases d'analyse et de validation mises en oeuvre par les algorithmes du module de commande 10 - telles que les étapes 903, 913, 934, 951 etc... un nombre réduit d'allumage ou d'extinction intempestifs.

C'est là également un grand avantage présenté par l'invention.

## Revendications

1. Lampe portative comportant un dispositif de commande de la puissance lumineuse, comportant :
- un circuit de puissance pour alimenter une ou plusieurs sources lumineuses ;
- des premiers circuits de détection de proximité d'un objet configurés pour détecter le mouvement d'un objet, tel qu'un doigt, dans un sens ou l'autre suivant un premier axe X-X';
- une unité de commande recevant les informations générées par lesdits premiers circuits de détection de proximité, ladite unité de commande étant configurée pour générer à partir du sens du mouvement de proximité une information de commande d'allumage, d'extinction ou de réglage de l'intensité lumineuse de la lampe.

2. Lampe portative selon la revendication 1 **caractérisée en ce que** tous les circuits de détection de proximité sont situés sur un même axe XX' d'un même côté de la source lumineuse.

3. Lampe portative selon la revendication 1 **caractérisée en ce que** tous les circuits de détection de proximité sont situés sur un même axe XX' situés de part et d'autre de la source lumineuse.

4. Lampe portative selon la revendication 1 **caractérisée en ce que** les circuits de détection de proximité comportent chacun une antenne configurée pour modifier la fréquence d'oscillation d'un oscillateur lors de la proximité d'un objet.

5. Lampe portative selon la revendication 1 à 3 **caractérisée en ce que** les circuits de détection de proximité comporte un capteur ultrasonore configuré pour détecter la proximité d'un objet vis à vis de la lampe.

6. Lampe portative selon l'une des revendications précédentes, **caractérisée en ce qu'**elle comporte :
- des premiers circuits de détection de proximité configurés pour discriminer un mouvement de gauche à droite ou de droite à gauche suivant un premier axe horizontal XX' ;
- des seconds circuits de détection de proximité configurés pour discriminer un mouvement de haut vers le bas et de bas vers le haut suivant un second axe sensiblement vertical YY'.

7. Lampe portative selon la revendication 6 **caractérisée en ce qu'**elle comporte un circuit de commande de la diffusion du rayon lumineux, et **en ce que** les premiers circuits de détection de proximité sont configurés pour la commande de l'intensité lumineuse de la lampe, et/ou de l'allumage et de l'extinction de cette dernière ;
les seconds circuits de détection de proximité étant configurés pour commander la diffusion du rayonnement lumineux.

8. Lampe portative selon la revendication 7 **caractérisée en ce que** la commande de la diffusion du rayon lumineux est générée au moyen d'un capteur PDLC commandé par ladite unité centrale à partir des informations générées par lesdits seconds circuits de détection de proximité suivant l'axe YY'.

9. Procédé de commande d'une lampe portative revendiquée dans l'une des revendications 1 à 5, **caractérisé en ce qu'**il comporte les étapes :
- détection d'un premier mouvement de proximité de type gauche/droite ou de droite/gauche et allumage de la lampe ;
- démarrage d'un compteur générant une fenêtre de réglage de l'intensité lumineuse ;
- détection d'un second mouvement de proximité durant ladite fenêtre de réglage et ;
- comparaison du sens du second mouvement par rapport à celui du premier mouvement et :
- accroissement de l'intensité lumineuse de la lampe lorsque le second mouvement de proximité présente le même sens que celui ayant provoqué l'allumage de la lampe ;
- réduction de l'intensité lumineuse de la lampe lorsque le second mouvement est de sens contraire à celui du premier mouvement;
- extinction de la lampe pour tout mouvement de proximité intervenant au-delà de ladite fenêtre de réglage.

10. Procédé de commande d'une lampe portative revendiquée dans la revendication 9 **caractérisé en ce qu'**il comporte en outre l'étape de détection d'un mouvement suivant un axe perpendiculaire YY', pour la commande d'un coefficient de diffusion du faisceau lumineux traversant une optique comportant un capteur PDLC.

11. Lampe portative selon l'une des revendications 1 à 8 **caractérisée en ce qu'**elle consiste en une lampe frontale.
